# EUROPÄISCHE PATENTANMELDUNG

(11) **EP 4 167 457 A1**
(43) Veröffentlichungstag der Anmeldung: **19.04.2023**
(21) Anmeldenummer: 22200030.9
(22) Anmeldetag: 06.10.2022
(51) Int. Cl.: H02M 3/335, H02M 1/32, H02M 1/00, H02H 3/087

(54) **VERFAHREN UND SCHALTUNGSANORDNUNG ZUR REGELUNG EINES SCHALTNETZTEILS**

(30) Priorität: 12.10.2021 DE 102021126399
(71) Anmelder: WAGO Verwaltungsgesellschaft mbH, 32423 Minden (DE)
(72) Erfinder: Peeck, Bernhard, 31719 Wiedensahl (DE)
(74) Vertreter: Gramm, Lins & Partner Patent- und Rechtsanwälte PartGmbB

(57) **Zusammenfassung**

Die Erfindung betrifft ein Verfahren zur Regelung eines Schaltnetzteils (1) mit einer Strombegrenzungsregelung (CC) zum Begrenzen des Ausgangsstroms (I_{OUT}) des Schaltnetzteils (1) auf einen vorgegebenen maximalen Begrenzungsstromwert(I_{Limit}), und mit einer Stromerhöhungsregelung zur Einstellung des vorgegebenen maximalen Begrenzungsstromwertes (I_{Limit}) auf einen vorbestimmten Überstromwert (I_{Boost}), der höher als ein vorbestimmter Maximalstromwert (I_{Max}) ist, für eine vorbestimmte Erhöhungszeit (t_{Boost}), wobei der Ausgangsstrom (I_{OUT}) durch einen Messwiderstand (R_{M}, R5) geleitet und die über den Messwiderstand (R_{Mess}, R5) abfallende Messspannung (V_{Mess}) als mit dem Ausgangsstrom (I_{OUT}) proportionaler Messwert mit einer ersten Vergleichsspannung (V1_{Comp}) verglichen wird, wobei die erste Vergleichsspannung (V1_{Comp}) auf eine mit dem Maximalstromwert (I_{Max}) korrelierende Nennvergleichsspannung oder eine zur Nennvergleichsspannung höhere Erhöhungsvergleichsspannung, die mit dem höheren Überstromwert (I_{Boost}) korreliert, eingestellt wird, und wobei das Vergleichsergebnis als Regelsignal zur Begrenzung des Ausgangsstroms (I_{OUT}) entweder auf den Maximalstromwert (I_{Max}) oder den Überstromwert (I_{Boost}) dient. Es wird eine konstante Referenzspannung (V_{Ref}) an einen Spannungsteiler, der aus einer Reihenschaltung von Spannungsteilerwiderständen (R2, R3, R4, R6, R7) gebildet ist, angelegt. Die erste Vergleichsspannung (V1_{Comp}) wird über einen ersten Teil der Spannungsteilerwiderstände (R2, R3, R4, R6, R7) als ein über den ersten Teil der Spannungsteilerwiderstände (R2, R3, R4, R6, R7) abfallender Anteil der konstanten Referenzspannung (V_{Ref}) abgegriffen. Mindestens einer der Spannungsteilerwiderstände (R2, R3, R4) wird zur Einstellung der ersten Vergleichsspannung (V1_{Comp}) auf die Nennvergleichsspannung für die Begrenzung des Ausgangsstroms (I_{OUT}) des Schaltnetzteils (1) auf den vorbestimmten Maximalstromwert (I_{Max}) überbrückt.

## Beschreibung

Die Erfindung betrifft ein Verfahren zur Regelung eines Schaltnetzteils mit einer Strombegrenzungsregelung zum Begrenzen des Ausgangsstroms des Schaltnetzteils auf einen vorgegebenen maximalen Begrenzungsstromwert, und mit einer Stromerhöhungsregelung zur Einstellung des vorgegebenen maximalen Begrenzungsstromwertes auf einen vorbestimmten Überstromwert, der höher als ein vorbestimmter Maximalstromwert ist, für eine vorbestimmte Erhöhungszeit. Der Ausgangsstrom wird durch einen Messwiderstand geleitet und die über den Messwiderstand abfallende Messspannung wird als mit dem Ausgangsstrom proportionaler Messwert mit einer ersten Vergleichsspannung verglichen, wobei die erste Vergleichsspannung auf eine mit dem Maximalstromwert korrelierende Nennvergleichsspannung oder eine zur Nennvergleichsspannung höhere Erhöhungsvergleichsspannung, die mit dem höheren Überstromwert korreliert, eingestellt wird, und wobei das Vergleichsergebnis als Regelsignal zur Begrenzung des Ausgangsstroms entweder auf den Maximalstromwert oder den Überstromwert dient.

Die Erfindung betrifft weiterhin eine Schaltungsanordnung zur Regelung eines Schaltnetzteils mit einer Strombegrenzungsregelungseinheit, die zum Begrenzen des Ausgangsstroms des Schaltnetzteils auf einen vorgegebenen maximalen Begrenzungsstromwert ausgebildet ist, und mit einer Stromerhöhungsregelungseinheit, die zur Einstellung des vorgegebenen maximalen Begrenzungsstromwertes auf einen vorbestimmten Überstromwert, der höher als ein vorbestimmter Maximalstromwert ist, für eine vorbestimmte Erhöhungszeit ausgebildet ist. Die Stromerhöhungsregelungseinheit hat einen Messwiderstand, durch den der Ausgangsstrom des Schaltnetzteils geleitet wird, und eine erste Vergleichseinheit, die zum Vergleichen der über den Messwiderstand abfallenden Messspannung als ein mit dem Ausgangsstrom proportionaler Messwert mit einer ersten Vergleichsspannung ausgebildet ist. Die Stromerhöhungsregelungseinheit ist zur Einstellung der ersten Vergleichsspannung auf eine mit dem Maximalstromwert korrelierende Nennvergleichsspannung oder auf eine zur Nennvergleichsspannung höhere Erhöhungsvergleichsspannung, die mit dem höheren Überstromwert korreliert, ausgebildet, wobei das Vergleichsergebnis als Regelsignal zur Begrenzung des Ausgangsstroms entweder auf den Maximalstromwert oder den Überstromwert an die Strombegrenzungsregelungseinheit geleitet wird.

Herkömmliche Schaltnetzteile sind oftmals mit einer Konstantspannungsregelung und einer Konstantstromregelung ausgestattet. Mit Hilfe der Konstantspannungsregelung wird bis zum Erreichen eines Nennstroms des Schaltnetzteils, oder bis knapp darüber hinaus, auf eine konstante Ausgangsspannung geregelt. Wird ein Schwellwert des Ausgangsstroms erreicht, dann greift die Konstantstromregelung ein und regelt die Ausgangsspannung so weit herunter, dass ein vorgegebener Maximalstrom nicht überschritten wird.

Es sind auch Schaltnetzteile bekannt, die mindestens eine Strombegrenzungsregelung aufweisen, um den Ausgangsstrom des Schaltnetzteils so zu begrenzen, dass ein vorgegebener Maximalstrom nicht überschritten wird. Hierzu kann die Ausgangsspannung heruntergeregelt werden.

Bei dem Abregeln des Ausgangsstroms ist, insbesondere bei Einbrechen der Ausgangsspannung, eine kurzzeitige deutliche Erhöhung des Ausgangsstroms über den vorgegebenen Maximalstrom oftmals nützlich und erforderlich, beispielsweise um nachgeschaltete Leistungsschutzschalter sicher auslösen zu können.

DE 10 2018 124 191 A1 offenbart ein Netzteil mit einer Wandlereinheit zur Bereitstellung einer Ausgangsleistung am Ausgang des Netzteils, das zur variablen Einstellung einer Boost-Ausgangsleistung und/oder einer Boost-Zwischenzeit für die Bereitstellung der Boost-Ausgangsleistung am Ausgang des Netzteils ausgebildet ist.

DE 10 2014 105 915 A1 beschreibt ein Energieversorgungsgerät mit einem Ausgang zum Ausgeben eines Ausgangsstroms und einer Ausgangsspannung und einem nachgeschalteten Schutzelement. Das Energieversorgungsgerät ist ausgebildet, um bei Überschreitung eines ersten Amplitudenschwellwertes durch den Ausgangsstrom eine Amplitude der Ausgangsspannung zu reduzieren und eine Amplitude des Ausgangsstroms über einen zweiten Amplitudenschwellwert zu erhöhen, um einen Signalausgabepfad zur Ansteuerung des Schutzelementes zu unterbrechen. Der erste Amplitudenschwellwert und eine vorbestimmte Zeitspanne einer Kurzzeitstromüberhöhung sind in einem Speicher des Energieversorgungsgerätes abgelegt. Die Ansteuerung erfolgt damit programmgesteuert mit einem Prozessor.

DE 10 2015 105 476 A1 offenbart ein Verfahren und eine Vorrichtung zur Energieversorgung einer Niederspannungslast. Eine Steuerlogik ermittelt aus der Höhe und dem zeitlichen Verlauf eines erfassten Ausgangsstroms zwei Stellgrößen einer Stelleinrichtung, um den bereitgestellten Strom mit einer ersten Stellgröße auf einen Nenn-Maximalstrom und mit einer zweiten Stellgröße auf einen höheren Stromspitzenwert zu begrenzen. Hierzu ist eine Steuerlogik mit Timern vorgesehen.

DE 10 2013 113 648 A1 offenbart eine Stromversorgungseinrichtung zum Umwandeln einer Eingangsspannung in eine Ausgangsspannung mit einer Pulsweitenmodulationsschaltung und einer Strombegrenzungsschaltung, die einen Ausgangsstrom nach Überschreiten eines Schwellwertes zunächst für einen Zeitraum auf einen erhöhten Maximalstrom begrenzt und danach auf einen regulären Maximalstrom begrenzt. Der Zeitraum, für den der Ausgangsstrom auf den erhöhten Maximalstrom begrenzt ist, wird abhängig von der Höhe des Ausgangsstroms variabel eingestellt. Der zum Auslösen einer nachgeschalteten Überstromsicherung erforderliche erhöhte Maximalstrom steht somit nicht für einen vorgegebenen Zeitraum und damit möglicherweise zu kurz zur Verfügung, sondern situationsbedingt für einen Zeitraum, dessen Dauer von der Höhe des im Überstromfall fließenden Stroms abhängig ist. Hierzu ist eine Integratorschaltung mit einem Kondensator als Integrationsglied sowie zumindest ein Lade- und/oder Entladewiderstand in einer Tiefpassanordnung vorgesehen.

Ausgehend hiervon ist es Aufgabe der vorliegenden Erfindung, ein verbessertes Verfahren und eine verbesserte Schaltungsanordnung zu schaffen, mit der bei einfachem und zuverlässigem Hardwareaufbau eine Vergleichsspannung als Regelsignal zur Begrenzung des Ausgangsstroms entweder auf einen Maximalstromwert oder einen Überstromwert eingestellt werden kann.

Die Aufgabe wird mit dem Verfahren mit den Merkmalen des Anspruchs 1 sowie durch die Schaltungsanordnung mit den Merkmalen des Anspruchs 6 gelöst. Vorteilhafte Ausführungsformen sind in den Unteransprüchen beschrieben.

Für das gattungsgemäße Verfahren wird vorgeschlagen, dass eine konstante Referenzspannung an einen Spannungsteiler, der aus einer Reihenschaltung von Spannungsteilerwiderständen gebildet ist, angelegt wird und die erste Vergleichsspannung über einen ersten Teil der Spannungsteilerwiderstände als ein über den ersten Teil der Spannungsteilerwiderstände abfallender Anteil der konstanten Referenzspannung abgegriffen wird, und dass mindestens einer der Spannungsteilerwiderstände zur Einstellung der ersten Vergleichsspannung auf die Nennvergleichsspannung für die Begrenzung des Ausgangsstroms des Schaltnetzteils auf den vorbestimmten Maximalstromwert überbrückt wird.

Damit kann eine Schaltungsanordnung, die zur Durchführung des Verfahrens eingerichtet ist, auf einfache, zuverlässige und preiswerte Weise aus einer Reihenschaltung von Spannungsteilerwiderständen als Spannungsteiler gebildet und mit einer konstanten Referenzspannung versorgt werden. Die erste Vergleichsspannung wird dann über einen ersten Teil der Spannungsteilerwiderstände abgegriffen und hat damit einen geringeren Spannungswert, als die konstante Referenzspannung. Die Einstellung der Vergleichsspannung erfolgt dann mit Hilfe des verbleibenden zweiten Teils der Spannungsteilerwiderstände, indem mindestens einer der Spannungsteilerwiderstände des zweiten Teils mit einem Überbrückungsschalter elektrisch leitend überbrückbar ist. Damit kann die an dem ersten Teil der Spannungsteilerwiderstände abgegriffene Vergleichsspannung zwei vorgegebene Spannungswerte annehmen, wenn in einem Fall der Überbrückungsschalter geöffnet und Strom durch den nicht überbrückten Teil der Spannungsteilerwiderstände fließt, und andererseits mindestens ein Spannungsteilerwiderstand des zweiten Teils des Spannungsteilers überbrückt wird und damit der Widerstand im zweiten Teil des Spannungsteilers reduziert wird. Durch die Überbrückung verringert sich die Vergleichsspannung.

Die Vergleichsspannung ist von der konstanten Referenzspannung und dem Widerstandsverhältnis im ersten und zweiten Teil der Spannungsteilerwiderstände abhängig, wobei sich das Spannungsteilerverhältnis bei Überberückung mindestens eines Spannungsteilerwiderstands des zweiten Teils des Spannungsteilers ändert.

Damit ist eine einfache, zuverlässige und schnell wirkende Regelung zur Strombegrenzung entweder auf den durch die konstante Referenzspannung und das Verhältnis der Spannungsteilerwiderstände vorbestimmten Maximalstromwert oder vorbestimmten Überstromwert möglich.

Denkbar ist aber auch die Überbrückung mindestens eines Spannungsteilerwiderstands des ersten Teils der Spannungsteilerwiderstände, über den die erste Vergleichsspannung abgegriffen wird. Dies hat dann eine invers arbeitende Logik zur Ansteuerung der Überbrückung z.B. mit Hilfe eines Überbrückungsschalters zur Folge im Vergleich zur Überbrückung mindestens eines Spannungsteilerwiderstands des zweiten Teils des Spannungsteilers, über den die Vergleichsspannung nicht abgegriffen wird.

Die Ansteuerung der Überbrückung kann durch Vergleichen der mit dem Ausgangsstrom proportionalen Messspannung mit einer zweiten Vergleichsspannung erfolgen, die im nicht überbrückten Zustand mindestens einer der Spannungsteilerwiderstände mit dem Überstromwert korreliert und die im überbrückten Zustand mindestens einer der Spannungsteilerwiderstände mit dem Maximalstromwert korreliert. Dann erfolgt ein verzögertes Überbrücken des mindestens einen Spannungsteilerwiderstands zur Einstellung der ersten Vergleichsspannung auf die Nennvergleichsspannung, wenn die Messspannung höher als die Vergleichsspannung ist. Die Verzögerung kann durch Entladen eines ersten Kondensators erfolgen, der während einer Entladephase einer ansonsten unmittelbar nach Erkennung, dass die Messspannung höher als die zweite Vergleichsspannung ist, abgeriegelten ersten Schaltspannung bereitstellt, die einen Überbrückungsschalter ansteuert.

Damit ist die zweite Vergleichsspannung abhängig davon, ob der Überbrückungsschalter zur Überbrückung des mindestens einen Spannungsteilerwiderstands angesteuert ist oder nicht. Das Erkennen eines Überstroms variiert somit je nachdem, ob eine Überbrückung erfolgt oder nicht.

So kann beispielsweise im nicht überbrückten Zustand eine höhere zweite Vergleichsspannung anliegen, die mit dem Überstromwert korreliert. Damit wird das Schaltnetzteil zunächst auf den Überstromwert begrenzt. Bei kurzzeitiger Überlastung über diesen Überstromwert hinaus erfolgt dann eine Strombegrenzung auf den Maximalstromwert nach der durch den ersten Kondensator vorgegebenen Verzögerungszeit, indem nach Ablauf der Verzögerungszeit der Überbrückungsschalter angesteuert, d.h. umgeschaltet wird. Dies führt dazu, dass die zweite Vergleichsspannung auf einen mit dem Maximalstrom korrelierenden Wert reduziert wird.

Denkbar ist, dass nach Ablauf einer zweiten Verzögerungszeit ein Abschalten des Überbrückungsschalters erfolgt, sobald der Ausgangsstrom unter den Maximalstromwert fällt. Dann wird die erste Vergleichsspannung wieder auf den Überstromwert gesetzt.

Eine solche Regelung ist insofern technisch machbar, ohne ein Schaltnetzteil zu überlasten, da nach Überschreiten des vorbestimmten Maximalstromwertes das Schaltnetzteil nicht dauerhaft über dem Maximalstromwert aber unterhalb des Überstromwerts arbeitet, sondern ein Stromanstieg über den Maximalstromwert hinaus in der Regel auch unmittelbar zu einem schnellen Anstieg über den Überstromwert hinaus führt. Daher kann anfänglich die Überwachungsgrenze auf den höheren Überstromwert gesetzt werden und nicht zwingend auf den niedrigeren Maximalstromwert, um eine Begrenzung im Dauerbetrieb bis zum Maximalstromwert sicherzustellen.

Denkbar ist aber auch, dass ein Vergleichen der mit dem Ausgangsstrom proportionalen Messspannung mit einer zweiten Vergleichsspannung, die im nicht überbrückten Zustand mindestens einer der Spannugnsteilerwiderstände mit dem Maximalstromwert korreliert und die im überbrückten Zustand mindestens einer der Spannungsteilerwiderstände mit einem geringeren als dem Maximalstromwert korreliert. Auch dann erfolgt ein verzögertes Überbrücken des mindestens einen Spannungsteilerwiderstands zur Einstellung der ersten Vergleichsspannung auf die Nennvergleichsspannung, wenn die Messspannung höher als die Vergleichsspannung ist. Die Verzögerung wird wiederum durch Entladen eines ersten Kondensators gesteuert, der während einer Entladephase der ansonsten unmittelbar nach Erkennung, dass die Messspannung höher als die zweite Vergleichsspannung ist, abgeregelten ersten Schaltspannung bereitstellt, der einen Überbrückungsschalter ansteuert.

Denkbar ist aber auch ein Vergleichen der mit dem Ausgangsstrom proportionalen Messspannung mit einer zweiten Vergleichsspannung, die mit dem vorbestimmten Maximalstromwert korreliert. Dann erfolgt ein verzögertes Überbrücken des mindestens einen Spannungsteilerwiderstands zur Einstellung der ersten Vergleichsspannung auf die Nennvergleichsspannung, wenn die Messspannung höher als die zweite Vergleichsspannung ist, wobei die Verzögerung durch Entladen eines ersten Kondensators erfolgt, der während einer Entladephase der ansonsten unmittelbar nach Erkennung, dass die Messspannung höher als die zweite Vergleichsspannung ist, abgeregelten ersten Schaltspannung bereitstellt, die einen Überbrückungsschalter ansteuert. Die zweite Vergleichsspannung wird hierbei proportional zu dem vorbestimmten Maximalstromwert festgelegt. Vorteilhaft ist es, wenn die zweite Vergleichsspannung dann auf dem vorbestimmten Wert konstant gehalten wird, unabhängig davon, ob der Überbrückungsschalter angesteuert ist oder nicht.

Die Schaltungsanordnung hat für die oben genannten Zwecke eine zweite Vergleichseinheit, die zum Vergleichen der mit dem Ausgangsstrom proportionalen Messspannung mit einer zweiten Vergleichsspannung ausgebildet ist.

Die zweite Vergleichsspannung kann beispielsweise in einer ersten Ausführungsform im nicht überbrückten Zustand mindestens einer der Spannungsteilerwiderstände mit dem Überstromwert korrelieren und im überbrückten Zustand mindestens einer der Spannungsteilerwiderstände mit dem Maximalstromwert.

In einem anderen Ausführungsbeispiel kann die zweite Vergleichsspannung im nicht überbrückten Zustand mindestens einer der Spannungsteilerwiderstände mit dem Maximalstromwert korrelieren und im überbrückten Zustand mindestens einer der Spannungsteilerwiderstände mit einem geringeren Wert als dem Maximalstromwert.

In einer weiteren beispielhaften Ausführungsform kann die zweite Vergleichsspannung mit dem vorbestimmten Maximalstromwert korrelieren. Sie kann in diesem Fall je nach Ansteuerung des Überbrückungsschalters variieren oder bevorzugt unabhängig vom Ansteuern des Überbrückungsschalters auch konstant sein.

In allen Varianten der zweiten Vergleichseinheit mit Festlegung der zweiten Vergleichsspannung hat die Stromerhöhungsregelungseinheit eine erste Verzögerungsschaltung mit einem ersten Kondensator. Die Stromerhöhungsregelungseinheit ist dabei zum verzögerten Überbrücken des mindestens einen Spannungsteilerwiderstands zur Einstellung der ersten Vergleichsspannung auf die Nennvergleichsspannung ausgebildet, wenn die Messspannung höher als die Vergleichsspannung ist. Die Verzögerung wird dabei durch Entladen des ersten Kondensators bewirkt, der während einer Entladephase eine Schaltspannung zur Ansteuerung des Überbrückungsschalters bereitstellt, die nach Entladen des Kondensators oder ohne den Kondensator so weit abgeregelt ist, dass der Überbrückungsschalter ausgeschaltet und der mindestens eine Spannungsteilerwiderstand damit nicht überbrückt ist.

Bei Anlegen der Schaltspannung an dem Überbrückungsschalter ist dieser hingegen geschlossen, sodass der mindestens eine Spannungsteilerwiderstand überbrückt ist.

Denkbar ist aber auch das inverse Schaltprinzip, bei dem der Überbrückungsschalter bei Anlegen einer ersten Schaltspannung und Auslösen des Überbrückungsschalters geöffnet und der mindestens eine Spannungsteilerwiderstand nicht überbrückt ist. Dann muss die Ansteuerungslogik entsprechend invertiert ausgebildet sein.

Um eine übermäßige Erwärmung des Schaltnetzteils oder eine Überlastung nach dem Betrieb mit dem Überstromwert zu verhindern ist es vorteilhaft, wenn dem Überbrückungsschalter eine weitere Schaltlogik vorgeschaltet ist, wobei die zweite Schaltspannung für den Überbrückungsschalter mit einem zweiten Kondensator während einer Entladezeit des zweiten Kondensators gehalten wird, wenn der vorgeschaltete erste Schalter vom geöffneten in den geschlossenen Zustand übergeht und die zweite Schaltspannung ansonsten abfallen würde. Damit kann eine Stromerhöhung auf den Überstromwert für eine durch die Entladezeit des zweiten Kondensators vorbestimmte Sperrzeit verhindert werden.

Bei dieser Ausführungsform können der erste Schalter und der Überbrückungsschalter invertiert so betrieben werden, dass der Überbrückungsschalter bei geschlossenem ersten Schalter an sich geöffnet ist und der Überbrückungsschalter umgekehrt bei geöffnetem ersten Schalter geschlossen ist.

Zur Ansteuerung der Stromerhöhungsregelungseinheit mit einer solchen Sperrzeit kann die Stromerhöhungsregelungseinheit beispielsweise einen ersten Schalter haben, wobei der Überbrückungsschalter dem ersten Schalter invers-schaltend so nachgelagert ist, dass der Überbrückungsschalter zur Überbrückung des mindestens einen Spannungsteilerwiderstands geschlossen ist, wenn der erste Schalter geöffnet ist. Die Stromerhöhungsregelungseinheit kann weiterhin eine zweite Verzögerungsschaltung mit einem zweiten Kondensator haben, die zum Halten einer zum Schalten des Überbrückungsschalters hinreichenden zweiten Schaltspannung für den Überbrückungsschalter mit dem zweiten Kondensator während einer Entladezeit des zweiten Kondensators ausgebildet ist, wenn der erste Schalter vom geöffneten in den geschlossenen Zustand übergeht und die zweite Schaltspannung ansonsten abfallen würde. Damit kann eine Stromerhöhung auf den Überstromwert für eine durch die Entladezeit des zweiten Kondensators vorbestimmte Sperrzeit verhindert werden.

Die erste Verzögerungsschaltung kann beispielsweise eine Parallelschaltung zu dem ersten Kondensator und einem Ohm'schen Widerstand sein. In gleicher Weise kann die zweite Verzögerungsschaltung eine Parallelschaltung zum zweiten Kondensator und einem Ohm'schen Widerstand haben. Eine solche Integratorschaltung mit Kondensator und zumindest einem Lade- und/oder Entladewiderstand in einer Tiefpassanordnung legt durch geeignete Bemessung der Bauteilwerte, d.h. dem Ohm'schen Widerstand und der Kapazität, die jeweilige Verzögerungszeit fest. Damit ist die Verzögerung konstruktiv vorbestimmbar.

Der ersten und zweiten Verzögerungsschaltung kann jeweils eine Diode in Durchlassrichtung vorgeschaltet sein. Damit wird eine Ausblendung negativer Spannungswerte in Art einer Gleichrichtung erreicht. Eine Entladung von Kondensatoren über die der jeweiligen Diode vorgelagerte Schaltung wird verhindert.

Besonders vorteilhaft ist es, wenn eine Spannungsbegrenzungsregelung vorhanden ist, die zum Begrenzen der Ausgangsspannung des Schaltnetzteils auf eine vorbestimmte maximale Nenn-Spannung ausgebildet ist. Dann kann die im Normalbetrieb wirkende Konstantspannungsregelung durch die zur Begrenzung der Ausgangsleistung auf den Maximalstromwert im Dauerbetrieb wirkende Konstantstromregelung überlagert werden.

Die Erfindung wird nachfolgend beispielhaft anhand der nachfolgenden Zeichnungen erläutert. Es zeigen:
- Figur 1: - Blockdiagramm eines Schaltnetzteils mit einer Konstantspannungs- und Konstantstromregelung;
- Figur 2: - Flussdiagramm des Verfahrens zur Regelung eines Schaltnetzteils;
- Figur 3: - beispielhaftes Stromdiagramm über die Zeit des abgeregelten Ausgangsstroms des Schaltznetzteils;
- Figur 4: - beispielhaftes Schaltdiagramm einer Schaltungsanordnung zur Regelung eines Schaltnetzteils.

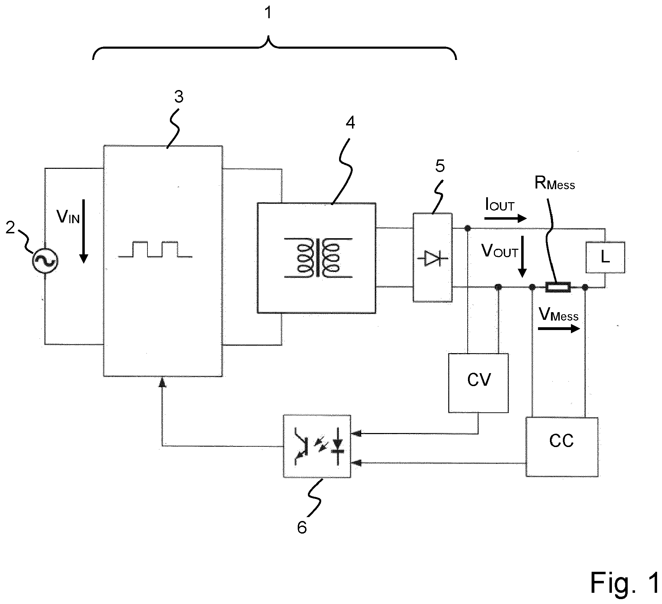

Figur 1 zeigt ein Blockdiagramm eines Schaltnetzteils 1, das mit von einer Eingangsspannungsquelle 2 mit elektrischer Energie gespeist wird. Die Eingangsspannung V_{IN} kann eine Gleich- oder Wechselspannung sein, je nach nachgelagerter Schaltnetzteilelektronik. Die Eingangsspannung V_{IN} wird aufbereitet und gepulst auf einen Transformator 4 gegeben. Anschließend wird die Spannung mit einem Gleichrichter 5 gleichgerichtet und als Ausgangsspannung V_{OUT} auf den Ausgang des Schaltnetzteils 1 gegeben, an dem eine Last L betrieben werden kann.

Eine Konstantspannungs-Regelungseinheit CV ist an den Ausgang des Schaltnetzteils 1 geklemmt, sodass die Ausgangsspannung V_{OUT} an dem Eingang der Konstantspannungs-Regelungseinheit CV anliegt. Diese überwacht die Ausgangsspannung V_{OUT} und vergleicht sie mit einer maximalen Nennspannung V_{Max}. Steigt die Ausgangsspannung V_{OUT} über die vorbestimmte Soll-Nennspannung V_{Max}, so wird ein Strom durch die Diodenseite eines Optokopplers 6 gelassen, sodass auf dessen Transistorseite, die auf der Primärseite des Schaltnetzteils 1 liegt, ebenfalls ein Strom fließt. Dieser Regelstrom bildet ein Regelsignal, mit dem das Schaltnetzteil 1 so geregelt wird, dass die Ausgangsspannung V_{OUT} auf dem vorbestimmten Sollwert V_{Max} konstant gehalten wird.

Fordert die Last L einen Ausgangsstrom I_{OUT}, der über einem vorbestimmten Maximalstromwert I_{Max} liegt, so erkennt eine Konstantstrom-Regelungseinheit CC dies. Hierzu kann der Ausgangsstrom I_{OUT} durch einen Messwiderstand R_{Mess} geleitet werden, über den eine Messspannung V_{Mess} abfällt. Diese Messspannung V_{Mess} wird mit einer mit dem vorbestimmten Maximalstromwert I_{Max} korrelierenden Nennvergleichsspannung verglichen. Wenn die Messspannung V_{Mess} die Nennvergleichsspannung überschreitet greift die Konstantstrom-Regelungseinheit CC ein und lässt einen Strom durch die Diodenseite des Optokopplers 6 fließen, sodass auf der Transistorseite des Optokopplers 6 ein Regelungssignal durch Stromfluss für das Schaltnetzteil 1 erzeugt wird. Dieses senkt in Abhängigkeit von dem Regelungssignal die Spannung so weit ab, dass der Ausgangsstrom I_{OUT}, d.h. der Laststrom auf der voreingestellten Schwelle gehalten wird.

Der Vergleich der Messspannung V_{Mess} und die Regelung durch die Konstantstrom-Regelungseinheit CC regelt aber nicht nur den Ausgangsstrom I_{OUT} auf den vorbestimmten Maximalstromwert, sondern sieht auch eine temporäre Leistungserhöhung durch Begrenzung des Ausgangsstroms I_{OUT} auf einen höheren Überstromwert für eine maximale Verzögerungszeit t_{Boost} vor.

Der Aufbau der Konstantstrom-Regelungseinheit CC und das Regelungsverfahren wird aus den nachfolgenden Figuren deutlicher.

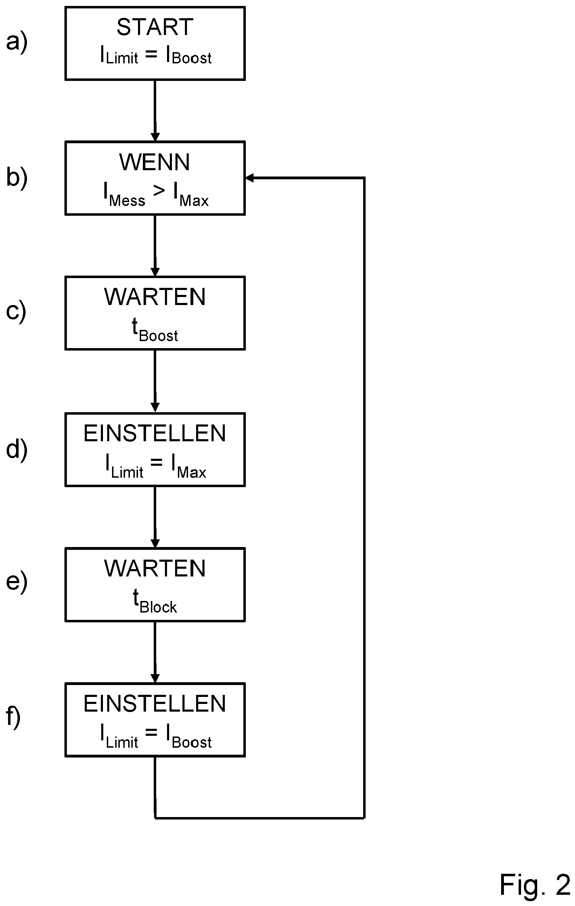

Figur 2 zeigt ein Flussdiagramm des Verfahrens zur Regelung des Schaltnetzteils 1 mit einer Strombegrenzungsregelung zum Begrenzen des Ausgangsstroms I_{OUT} des Schaltnetzteils 1 auf einen vorgegebenen maximalen Begrenzungsstromwert.

Dieser Begrenzungsstromwert I_{Limit} wird zu Beginn beispielsweise auf einen vorbestimmten Überstromwert I_{Boost} eingestellt.

Es wird dann im Betrieb laufend der Ausgangsstrom I_{OUT} als durch den Messwiderstand R_{Mess} fließender Messstrom IMess bzw. deren proportionale Messspannung V_{Mess}, die über einen Messwiderstand R_{Mess} abfällt, mit einer ersten Vergleichsspannung V1_{Comp} bzw. proportionaler Vergleichsstrom Icomp verglichen. Wenn der gemessene Strom IMess größer als der vorbestimmte Maximalstromwert I_{Max} ist, d.h. wenn die gegenüber dem Messwiderstand R_{Mess} abfallende Messspannung V_{Mess} größer als die erste Vergleichsspannung V1_{Comp} ist, die auf den Maximalstromwert V_{Max} eingestellt wird, wird das Schaltnetzteil 1 so geregelt, dass der Ausgangsstrom I_{OUT} auf den Überstromwert I_{Boost} für eine maximale, vorbestimmte Überlastzeit t_{Boost} begrenzt wird. Damit kann das Schaltnetzteil 1 beispielsweise zum Abschalten eines Sicherheitsschutzes noch die erforderliche Ausgangsleistung bereitstellen. Mit Hilfe einer Begrenzung der Überlastzeit t_{Boost} wird eine Überlastung des Schaltnetzteils 1 während des Betriebs oberhalb der vorgegebenen Nennleistung mit dem Maximalstromwert I_{Max} verhindert.

Somit wird nach Erkennen einer Überschreitung des Maximalstromwertes I_{Max} gewartet, bis die Überlastzeit t_{Boost} verstrichen ist. Anschließend erfolgt ein Einstellen der ersten Vergleichsspannung V1 comp bzw. des damit proportionalen maximalen Begrenzungsstromwertes Limit auf den Maximalstromwert I_{Max}. Damit wird das Schaltnetzteil 1 so geregelt, dass der Ausgangsstrom I_{OUT} auf den vorbestimmten Maximalstromwert I_{Max} begrenzt wird.

Das Zurücksetzen der ersten Vergleichsspannung V1_{Comp} auf den vorbestimmten Überstromwert wird dann für eine Sperrzeit t_{Block} verhindert. Somit wird mindestens bis zum Ablauf der Sperrzeit t_{Block} gewartet, bis dann wieder ein Einstellen der ersten Vergleichsspannung V1_{Comp} auf die Erhöhungsvergleichsspannung erfolgt, um den maximalen Begrenzungsstromwert I_{Limit} auf den Überstromwert I_{Boost} zurückzusetzen.

Damit kann das Schaltnetzteil 1 bei Anforderung durch die Last einen höheren Ausgangsstrom I_{OUT}, als der vorbestimmte Maximalstromwert I_{Max} abgeben.

Die Stromerhöhungsregelung überprüft dann wieder laufend, ob der Messstrom I_{Mess} größer als der vorbestimmte Maximalstromwert I_{Max} ist, d.h. ob die über den Messwiderstand I_{Max} abfallende Messspannung V_{Mess} größer als eine zweite Vergleichsspannung ist, die mit dem Maximalstromwert I_{Max} korreliert.

Dann wird das Verfahren in der oben beschriebenen Weise iterativ fortgeführt.

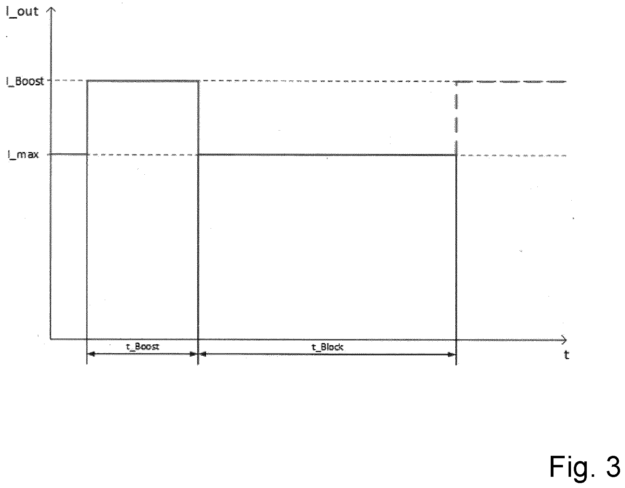

Der Ablauf der Strombegrenzungsregelung CC wird aus dem Stromdiagramm des Ausgangsstroms I_{OUT} über die Zeit t anhand der Figur 3 deutlicher.

Wenn der Ausgangsstrom I_{OUT} den Maximalstromwert I_{Max} übersteigt ist dies anfänglich zulässig, da der maximale Begrenzungsstromwert auf einen vorbestimmten Überstromwert Boost eingestellt ist (Schritt a) in Figur 2). Hierzu ist eine zweite Vergleichsspannung V2comp so vorgegeben, dass diese entweder mit dem Überstromwert I_{Boost} oder dem Maximalstromwert I_{Max} korreliert. So ist, wie im Schritt b) beispielhaft beschrieben wird, eine Begrenzung des Ausgangsstroms I_{OUT} auf den Überstromwert I_{Boost} möglich, wenn der Ausgangsstrom I_{OUT} den Überstromwert I_{Max} überschreitet. Diese Einstellung des maximalen Begrenzungsstromwertes I_{Limit} durch die erste Vergleichsspannung V1_{Comp}, die mit dem Überstromwert I_{Boost} korreliert wird nur für eine begrenzte Erhöhungszeit t_{Boost} zugelassen. Nach Ablauf der Erhöhungszeit t_{Boost}, die beginnt, wenn der Ausgangsstrom I_{OUT} den Maximalstromwert I_{Max} überschreitet, wird der maximale Begrenzungsstromwert I_{Limit} durch Einstellen der ersten Vergleichsspannung V1_{Comp} auf den Maximalstromwert I_{Max} reduziert. Der Ausgangsstrom I_{OUT} des Schaltnetzteils 1 wird damit auf den Überstromwert I_{Max} begrenzt. Diese Vorgabe wird während einer Sperrzeit t_{Block} beibehalten, sodass der maximale Begrenzungsstromwert I_{Limit} auf dem vorbestimmten Maximalstromwert I_{Max} gehalten wird. Damit wird sichergestellt, dass das Schaltnetzteil 1 nicht durch ein für die Konstruktion zu häufigen oder zu lang andauernden Betrieb oberhalb der vorbestimmten Nennleistung mit dem Überstromwert I_{Boost} betrieben wird und damit die Bauteile überlastet werden. Mit Hilfe der Sperrzeit t_{Block} wird auch sichergestellt, dass sich das Schaltnetzteil 1 nach dem Überlastbetrieb mit dem Überstromwert I_{Boost} abkühlen kann.

Nach Ablauf der Sperrzeit t_{Block} wird der maximale Begrenzungsstromwert I_{Limit} wieder im Schritt f) auf den vorbestimmten Überstromwert I_{Boost} zurückgestellt, sodass das Schaltnetzteil 1 dann wieder auch eine oberhalb des Maximalstromwerts I_{Max} und der damit korrelierenden Nennvergleichsspannung liegenden Ausgangs-Nennleistung betrieben werden kann, allerdings nur für eine vorbestimmte Erhöhungszeit t_{Boost}.

Der Eintritt in diese nächste Erhöhungsphase ist abhängig von der Leistung, die die Last L abfordert. So ist auch denkbar, dass der Ausgangsstrom I_{OUT} vor der skizzierten Phase oder während der Sperrzeit t_{Block} unter den Maximalstromwert I_{Max} abfällt. Der Anstieg des Ausgangsstroms I_{OUT} auf den Überstromwert I_{Boost} muss auch nicht direkt nach Ablauf der Sperrzeit t_{Block} auftreten.

Damit kann die Schwelle, d.h. der maximale Begrenzungsstromwert Limit für den Ausgangsstrom I_{OUT} auf einen höheren Überstromwert I_{Boost} eingestellt werden. Nach einer bestimmten Erhöhungszeit t_{Boost} greift die Schaltung dann in die Überstromregelung ein und senkt den maximalen Ausgangsstrom I_{OUT} auf den Maximalstrom I_{Max} des Schaltnetzteils 1, der dauerhaft abgegeben werden kann.

Zudem wird nach der Abgabe eines Boosts, d.h. des Überstromwertes I_{Boost} verhindert, dass innerhalb kurzer Zeit ein weiterer Überstromwert I_{Boost} abgegeben werden kann. Eine zu häufige Boostabgabe könnte das Schaltnetzteil 1 überlasten und dadurch zu Schäden führen. Daher wird nach jedem Überstromwert I_{Boost} die Boostfunktion für eine bestimmte Sperrzeit t_{Block} gesperrt.

Die Höhe des Booststroms I_{Boost}, die Boostzeit t_{Boost} und die Sperrzeit t_{Block} zwischen möglichen Boosts lassen sich durch Abstimmungen von Bauteilwerten einzelner Bauteile einer elektronischen Schaltung in Hardware anpassen. Dies lässt sich ohne programmgesteuerte Mikrocontroller auf zuverlässige, einfache und preiswerte Weise vollständig als diskrete Schaltung realisieren.

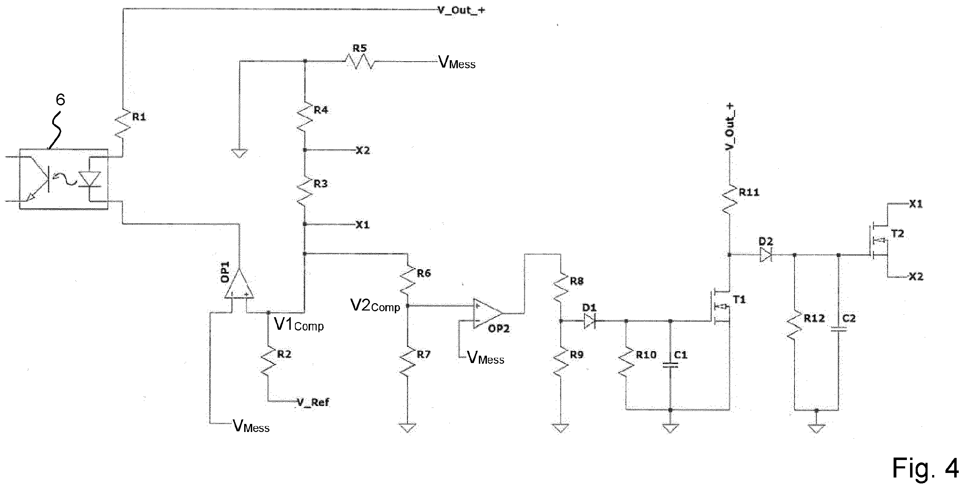

Ein beispielhafter Schaltplan der Schaltungsanordnung zur Regelung eines Schaltnetzteils 1 ist in Figur 4 dargestellt.

Der in Figur 1 skizzierte Optokoppler 6 zur Abgabe des Regelsignals für das Schaltnetzteil 1 ist auf der linken Seite dargestellt und wird über einen ersten Optokoppler als erste Vergleichseinheit OP1 angesteuert und über einen ersten Ohm'schen Widerstand R1 über die Ausgangsspannung V_{OUT+} betrieben.

An einem Eingang der ersten Vergleichseinheit OP1 liegt die über dem Messwiderstand R_{Mess} abfallende Messspannung V_{Mess} an. Diese wird mit einer ersten Vergleichsspannung V1_{Comp} verglichen, die über einen Teil eines Spannungsteilers abgegriffen wird, der aus einer Reihenschaltung von Spannungsteilerwiderständen R2, R3, R4 gebildet ist. An dem Spannungsteiler liegt eine konstante Referenzspannung V_{Ref} an.

Von diesem Spannungspotential V_{Ref} gesehen wird die erste Vergleichsspannung V1_{Comp} über den Spannungsteilerwiderstand R2 abgegriffen. Von dem Basispotential GND aus gesehen wird die Referenzspannung Vcomp über die Spannungsteilerwiderstände R3 und R4 abgegriffen. Für die erste Vergleichseinheit OP1 ist die relative Betrachtung unerheblich, dass immer auf die Differenz zwischen dem Spannungspotential zwischen V_{Mess-} und V1_{Comp} ankommt.

Der Messwiderstand R_{Mess} entspricht dem Ohm'schen Widerstand R5. Durch diesen fließt ein Strom, sodass die Messspannung V_{Mess} zum Basispotential über dem Messwiderstand R_{Mess} abfällt. Das Basispotential bzw. die Masse GND ist mit einem Dreieck bzw. einer Pfeilspitze in fachüblicher Weise gekennzeichnet.

Der Spannungsteilerwiderstand R3 des zweiten Teils des Spannungsteilers kann über die Abgriffe X1, X2 überbrückt werden. Hierzu hat die Schaltungsanordnung einen Überbrückungsschalter T2, dessen Ausgang mit den beiden Abgriffen X1, X2 verbunden ist. Der Überbrückungsschalter T2 kann ein Relais oder wie dargestellt ein Schalttransistor sein.

In dem Spannungsteiler wirken noch die weiteren konstanten Ohm'schen Widerstände R6 und R7, die mit einem Eingang einer zweiten Vergleichseinheit OP2 (Operationsverstärker) verbunden sind. Diese Reihenschaltung der Ohm'schen Widerstände R6, R7 ist einerseits mit dem Eingang der ersten Vergleichsspannung V1_{Comp} an der ersten Vergleichseinheit OP1 und andererseits mit dem Basispotential GND verbunden und damit parallel zu der Reihenschaltung der Ohm'schen Spannungsteilerwiderstände R3, R4 geschaltet. Damit wird auch die erste Vergleichsspannung V1_{Comp} durch diese beiden Ohm'schen Widerstände R6, R7 mitbestimmt. Dies ist bei der Bemessung der Bauteilwerte zu berücksichtigen, aber im Betrieb unerheblich, da die Ohm'schen Widerstände R6, R7 konstant sind und keine lastabhängige Variation des hindurchfließenden Stroms erfolgt.

Durch die Bemessung dieser Spannungsteilerwiderstände R2, R3, R4, R6 und R7 können somit zwei vorbestimmte Werte für die erste Vergleichsspannung V1comp vorgegeben werden und zwar einerseits für den nicht überbrückten Zustand des Spannungsteilerwiderstands R3 und andererseits für den überbrückten Zustand des Spannungsteilerwiderstands R3.

Der Messwiderstand R5 ist ein niederohmiger Widerstand, durch den der Ausgangsstrom I_{OUT} fließt. Steigt der Ausgangsstrom I_{OUT}, so steigt auch die an diesem Messwiderstand R_{Mess} bzw. R5 abfallende Spannung V_{OUT-}, die als eine mit dem Ausgangsstrom I_{OUT} proportionale Messspannung V_{Mess} an einem Vergleichseingang der ersten Vergleichseinheit OP1 angelegt und mit der ersten Vergleichseinheit OP1 mit der ersten Vergleichsspannung V1_{Comp} verglichen wird.

Diese wird aus der konstanten Referenzspannung V_{Ref} mittels des Spannungsteilers erzeugt und entweder auf eine mit einem vorbestimmte Maximalstromwert I_{Max} korrelierenden Nennvergleichsspannung oder eine mit dem vorbestimmten Überstromwert I_{Boost} korrelierenden Erhöhungsvergleichsspannung gesetzt.

Wenn die Messspannung V_{Mess} einen durch die erste Vergleichsspannung V1_{Comp} vorgegebenen Schwellwert überschreitet, so wird die Konstantstromregelung CC aktiv und regelt die Ausgangsspannung V_{OUT} des Schaltnetzteils 1 derart herunter, dass der vorgegebene maximale Begrenzungsstromwert I_{Limit} nicht überschritten wird.

Der maximale Begrenzungsstromwert Limit bzw. die damit korrelierende erste Vergleichsspannung V1_{Comp} liegt umso höher, je höher der durch die Reihenschaltung der Spannungsteilerwiderstände R3, R4 gebildete Teil des Spannungsteilers ist. Im nicht überbrückten Zustand des Spannungsteilerwiderstands R3 ist die erste Vergleichsspannung V1_{Comp} somit auf den Wert der Erhöhungsvergleichsspannung eingestellt, die mit dem Überstromwert I_{Boost} korreliert.

Um einen Überstrombetrieb Boost mit dem Überstromwert I_{Boost} auf eine maximale Erhöhungszeit t_{Boost} zu begrenzen, ermöglicht es die durch die Spannungsteilerwiderstände R6 und R7 und die an deren gemeinsamer Verbindungsstelle angeschlossene nachfolgende Schaltung, den Spannungsteilerwiderstand R3 nach Ablauf der Erhöhungszeit t_{Boost} zu überbrücken und damit den erlaubten Ausgangsstrom I_{OUT} auf einen im Vergleich zum Überstromwert I_{Boost} niedrigeren vorbestimmten Maximalstromwert I_{Max} zu begrenzen.

Hierzu wird mit einer zweiten Vergleichseinheit OP2 (z.B. Operationsverstärker) die Messspannung V_{Mess}, die über den Messwiderstand R5 abfällt, mit einer zweiten Vergleichsspannung V2comp verglichen, die ebenfalls von der Referenzspannung V_{Ref} abgeleitet ist. Wenn keine Überlast anliegt, so schaltet die zweite Vergleichseinheit OP2 einen nachfolgenden ersten Schalter T1 so, dass der Schaltausgang elektrisch leitend überbrückt ist. Der erste Schalter T1 kann beispielsweise als Transistor wie dargestellt oder als Relais oder sonstiger elektronischer Schalter ausgeführt sein. Wenn der erste Schalter T1 auf diese Weise geschlossen ist, liegt der Eingang einer zweiten Diode D2 auf Massepotential und entsprechend fällt auch keine Spannung über den Eingang des Überlastschalters T2 an. Dieser Überlastschalter T2 ist dann geöffnet. Somit arbeiten der erste Schalter T1 und der nachfolgende Überlastschalter T2 mit einer voneinander abhängigen inversen Logik. Wenn der erste Schalter T1 geöffnet ist, dann liegt an dem Überbrückungsschalter T2 ein Spannungspotential an, das durch die Ausgangsspannung V_{OUT}, den Ohm'schen Widerstand R11 und einen weiteren Ohm'schen Widerstand R12 sowie einen zweiten Kondensator C2 bestimmt ist. Die Parallelschaltung aus dem weiteren Ohm'schen Widerstand R12 und dem zweiten Kondensator C2 bildet eine Integratorschaltung, die einerseits an Masse und mit dem anderen Verbindungspunkt an dem Schalteingang des Überstromschalters T2 geklemmt ist. Sie bildet mit dem Ohm'schen Widerstand R11 einen Spannungsteiler, der mit der Ausgangsspannung V_{OUT} betrieben wird. Die zweite Diode D2 ist in Durchlassrichtung der zweiten Verzögerungsschaltung vorgeschaltet, die aus dem Ohm'schen Widerstand R12 und dem zweiten Kondensator C2 gebildet ist.

Der Ausgang der zweiten Vergleichseinheit OP2 ist mit einem zweiten Spannungsteiler verbunden, der aus der Reihenschaltung der Ohm'schen Widerstände R8 und R9 gebildet wird. Dieser zweite Spannungsteiler ist optional. Er ist aber nützlich, um die Ausgangsspannung der zweiten Vergleichseinheit OP2 auf eine zum Schalten des ersten Schalters T1 angepasste, geeignete Spannung herunterzuregeln. Gegebenenfalls kann auch die erste Diode D1 optional in Durchlassrichtung an den Verbindungspunkt zwischen den Spannungsteilerwiderständen R8 und R9 angeschlossen sein, um eine Gleichrichtung sicherzustellen und störende Stromspitzen beim Schaltwechsel auszublenden.

Wenn nun die Messspannung V_{Mess} die zweite Vergleichsspannung V2comp überschreitet, so schaltet die zweite Vergleichseinheit OP2 die Spannung an dem ersten Schalter T1 ab. Der Schalteingang wird dabei jedoch immer noch von dem ersten Kondensator C1 gestützt, der zusammen mit einem parallelgeschalteten Ohm'schen Widerstand R10 eine erste Verzögerungsschaltung bildet. Damit wird auch nach dem Abschalten der zweiten Vergleichseinheit OP2 noch für eine vorbestimmte Erhöhungszeit t_{Boost} der erste Schalter T1 im leitenden Zustand gehalten. Hierzu eignet sich die Nutzung eines Transistors als ersten Schalter, dessen Gate den Schalteingang bildet.

Der erste Kondensator C1 wird über den Ohm'schen Widerstand R10 langsam entladen. Die Bauteilwerte für den ersten Kondensator C1 und den Ohm'schen Widerstand R10 bestimmten die Verzögerungszeit t_{Boost}. Nach Ablauf dieser Erhöhungszeit t_{Boost} ist die Spannung am ersten Schalter T1, d.h. beispielsweise an dem Gate, so weit gesunken, dass der erste Schalter T1 abschaltet.

Die Erhöhungszeit t_{Boost} lässt sich durch Variation der Bauteilwerte für den Ohm'schen Widerstand R10 und den ersten Kondensator C1 einstellen und werksseitig vorbestimmen.

Wenn nun nach Ablauf der Erhöhungszeit t_{Boost} der erste Schalter T1 öffnet, dann liegt an dem Überbrückungsschalter T2 nun eine Spannung an, die aus dem Spannungsteiler der Ohm'schen Widerstände R11 und R12 gebildet wird. Dadurch schaltet der Überbrückungsschalter T2 in den leitenden Zustand und überbrückt den Spannungsteilerwiderstand R3 des ersten Spannungsteilers. Dies hat zur Folge, dass die erste Vergleichsspannung V1_{Comp}, die mit dem maximalen Begrenzungsstromwert Limit korreliert, auf den vorbestimmten Maximalstromwert I_{Max}, d.h. die damit korrelierende Nennvergleichsspannung eingestellt wird.

Nach Ablauf der Erhöhungszeit t_{Boost} und der damit verbundenen Umschaltung der ersten Vergleichsspannung V1_{Comp} und der Strombegrenzung auf den Maximalstromwert I_{Max} kann die zweite Vergleichseinheit OP2 wieder einschalten und eine Spannung an dem Ausgang abgeben, wenn die Messspannung V_{Mess} kleiner als die zweite Vergleichsspannung V2comp ist. Dies erfolgt in der Regel direkt nach der Überbrückung des Spannungsteilerwiderstands R3 unter Reduzierung der ersten Vergleichsspannung V1 comp. Damit schaltet der erste Schalter T1 wieder in den leitenden Zustand und die erste Verzögerungsschaltung wird wieder aufgeladen, um dem Messzyklus eine neue Erhöhungszeit t_{Boost} vorzugeben.

Durch das Wiedereinschalten des ersten Schalters T1 würde die Schaltspannung am Gate des Überbrückungsschalters T2 einbrechen, sodass dann die Überbrückung des Stromteilerwiderstands R3 aufgehoben würde und der maximale Begrenzungsstromwert Limit auf den Überstromwert I_{Boost} eingestellt wird.

Dies wird jedoch durch die zweite Verzögerungseinheit verhindert, die das Gate des Überbrückungsschalters T2 durch den zweiten Kondensator C2 für eine Sperrzeit t_{Block} stützt. Dieser zweite Kondensator C2 wird durch den parallelgeschalteten Ohm'schen Widerstand R12 langsam entladen, sodass der Überbrückungsschalter T2 erst nach Ablauf der Sperrzeit t_{Block} wieder leitfähig wird. Die zweite Diode D2 verhindert dabei ein schnelles Entladen des zweiten Kondensators C2 über den ersten Schalter T1.

Auch die Sperrzeit t_{Block} kann durch Variation der Bauteilwerte des Ohm'schen Widerstands R12 und den zweiten Kondensator C2 eingestellt und werksseitig fest vorbestimmt werden.

Die Zeiten für die Erhöhungszeit t_{Boost} und die Sperrzeit t_{Block} lassen sich über einen sehr großen Bereich variieren. Es sind Zeiten von weniger als 1 Sekunde bis hin zu mehreren Minuten möglich.

Die Reihenschaltung der Spannungsteilerwiderstände R3 und R4 können um weitere Widerstände erweitert werden. Dabei können zusätzliche Widerstände überbrückbar sein, wobei die zur Überbrückung beschriebenen Schaltungsteile wiederholt ausgeführt werden können, um die weiteren Spannungsteilerwiderstände zeitbegrenzt zu überbrücken. Damit lässt sich ein mehrstufiger Boost, d.h. eine mehrstufige Erhöhung des Begrenzungsstromwerts auf einen jeweiligen Überstromwert realisieren. Die Überstromwerte können auf diese Weise mehrere unterschiedliche vorbestimmte Werte annehmen, die von den Bauteilwerten der Spannungsteilerwiderstände und insbesondere von den Bauteilwerten der jeweils überbrückten Spannungsteilerwiderstände abhängen.

Die beschriebene Schaltungsanordnung ermöglicht es mit günstigen Bauteilen einen Boost in Schaltnetzteilen zu erreichen. Damit ist es möglich, dass ein Schaltnetzteil 1 ohne sofortige Begrenzung beim Einschalten bestimmter Lasten, die einen erhöhten Anlaufstrom aufnehmen, weiter betrieben wird. Dazu zählen zum einen Geräte mit großer Eingangskapazität oder auch Elektromotoren. Ein kurzzeitiger erhöhter Ausgangsstrom kann zum einen ermöglichen, dass solche Lasten schneller anlaufen. Zum anderen kann damit verhindert werden, dass die Ausgangsspannung beim Zuschalten dieser Lasten kurz einbricht. Dies könnte andere, parallel liegende Lasten negativ beeinflussen.

Der Boost mit der Begrenzung der Leistung des Schaltnetzteils 1 für eine begrenzte Erhöhungszeit auf einen höheren Überstromwert kann auch genutzt werden, um (elektronische) Schutzschalter zwischen Schaltnetzteil 1 und Last L sicher auslösen zu können. Durch den Boost kann dabei die Notwendigkeit entfallen, das Schaltnetzteil 1 überdimensionieren zu müssen, um einen ausreichenden Auslösestrom bereitzustellen.

## Patentansprüche

1. Verfahren zur Regelung eines Schaltnetzteils (1) mit einer Strombegrenzungsregelung (CC) zum Begrenzen des Ausgangsstroms (I_{OUT}) des Schaltnetzteils (1) auf einen vorgegebenen maximalen Begrenzungsstromwert (I_{Limit}), und mit einer Stromerhöhungsregelung zur Einstellung des vorgegebenen maximalen Begrenzungsstromwertes (I_{Limit}) auf einen vorbestimmten Überstromwert (I_{Boost}), der höher als ein vorbestimmter Maximalstromwert (I_{Max}) ist, für eine vorbestimmte Erhöhungszeit (t_{Boost}), wobei der Ausgangsstrom (I_{OUT}) durch einen Messwiderstand (R_{Mess}, R5) geleitet und die über den Messwiderstand (R_{Mess}, R5) abfallende Messspannung (V_{Mess}) als mit dem Ausgangsstrom (I_{OUT}) proportionaler Messwert mit einer ersten Vergleichsspannung (V1_{Comp}) verglichen wird, wobei die erste Vergleichsspannung (V1_{Comp}) auf eine mit dem Maximalstromwert (I_{Max}) korrelierende Nennvergleichsspannung oder eine zur Nennvergleichsspannung höhere Erhöhungsvergleichsspannung, die mit dem höheren Überstromwert (I_{Bosst}) korreliert, eingestellt wird, und wobei das Vergleichsergebnis als Regelsignal zur Begrenzung des Ausgangsstroms (I_{OUT}) entweder auf den Maximalstromwert (I_{Max}) oder den Überstromwert (I_{Boost}) dient, **dadurch gekennzeichnet, dass** eine konstante Referenzspannung (V_{Ref}) an einen Spannungsteiler, der aus einer Reihenschaltung von Spannungsteilerwiderständen (R2, R3, R4, R6, R7) gebildet ist, angelegt wird und die erste Vergleichsspannung (V1 comp) über einen ersten Teil der Spannungsteilerwiderstände (R2, R3, R4, R6, R7) als ein über den ersten Teil der Spannungsteilerwiderstände (R2, R3, R4, R6, R7) abfallender Anteil der konstanten Referenzspannung (V_{Ref}) abgegriffen wird, und dass mindestens einer der Spannungsteilerwiderstände (R2, R3, R4) zur Einstellung der ersten Vergleichsspannung (V1_{Comp}) auf die Nennvergleichsspannung für die Begrenzung des Ausgangsstroms (I_{OUT}) des Schaltnetzteils (1) auf den vorbestimmten Maximalstromwert (I_{Max}) überbrückt wird.

2. Verfahren nach Anspruch 1, **gekennzeichnet durch** Vergleichen der mit dem Ausgangsstrom (I_{OUT}) proportionalen Messspannung (V_{Mess}) mit einer zweiten Vergleichsspannung (V2comp), die im nicht überbrückten Zustand mindestens einer der Spannungsteilerwiderstände (R2, R3, R4) mit dem Überstromwert (I_{Boost}) korreliert und die im überbrückten Zustand mindestens einer der Spannungsteilerwiderstände (R2, R3, R4) mit dem Maximalstromwert (I_{Max}) korreliert, und verzögertes Überbrücken des mindestens einen Spannungsteilerwiderstandes (R2, R3, R4) zur Einstellung der ersten Vergleichsspannung (V1 comp) auf die Nennvergleichsspannung, wenn die Messspannung (V_{Mess}) höher als die zweite Vergleichsspannung (V2comp) ist, wobei die Verzögerung (t_{Boost}) durch Entladen eines ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelten ersten Schaltspannung, die einen Überbrückungsschalter (T2) ansteuert, bereitstellt.

3. Verfahren nach Anspruch 1, **gekennzeichnet durch** Vergleichen der mit dem Ausgangsstrom (I_{OUT}) proportionalen Messspannung (V_{Mess}) mit einer zweiten Vergleichsspannung (V2comp), die im nicht überbrückten Zustand mindestens einer der Spannungsteilerwiderstände (R2, R3, R4) mit dem Maximalstromwert (I_{Max}) korreliert und die im überbrückten Zustand mindestens einer der Spannungsteilerwiderstände (R2, R3, R4) mit einem geringeren Wert als der Maximalstromwert (I_{Max}) korreliert, und verzögertes Überbrücken des mindestens einen Spannungsteilerwiderstandes (R2, R3, R4) zur Einstellung der ersten Vergleichsspannung (V1_{Comp}) auf die Nennvergleichsspannung, wenn die Messspannung höher als die zweite Vergleichsspannung (V2comp) ist, wobei die Verzögerung (t_{Boost}) durch Entladen eines ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelten ersten Schaltspannung, die einen Überbrückungsschalter (T2) ansteuert, bereitstellt.

4. Verfahren nach Anspruch 1, **gekennzeichnet durch** Vergleichen der mit dem Ausgangsstrom (I_{OUT}) proportionalen Messspannung (V_{Mess}) mit einer zweiten Vergleichsspannung (V2comp), die mit dem vorbestimmten Maximalstromwert (I_{Max}) korreliert, und verzögertes Überbrücken des mindestens einen Spannungsteilerwiderstandes (R2, R3, R4) zur Einstellung der ersten Vergleichsspannung (V1 comp) auf die Nennvergleichsspannung, wenn die Messspannung (V_{Mess}) höher als die zweite Vergleichsspannung (V2_{Comp}) ist, wobei die Verzögerung (t_{Boost}) durch Entladen eines ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelten ersten Schaltspannung, die einen Überbrückungsschalter (T2) ansteuert, bereitstellt.

5. Verfahren nach einem der Ansprüche 2 bis 4, **gekennzeichnet durch** Ansteuern eines ersten Schalters (T1) mit der ersten Schaltspannung, wobei dem ersten Schalter (T1) der Überbrückungsschalter (T2) invers nachgeschaltet ist, sodass der Überbrückungsschalter (T2) zur Überbrückung des mindestens einen Spannungsteilerwiderstandes (R2, R3, R4) geschlossen ist, wenn der erste Schalter (T1) geöffnet ist, und dass die zweite Schaltspannung für den Überbrückungsschalter (T2) mit einem zweiten Kondensator (C2) während einer Entladezeit des zweiten Kondensators (C2) gehalten wird, wenn der erste Schalter (T1) vom geöffneten in den geschlossenen Zustand übergeht und die zweite Schaltspannung ansonsten abfallen würde, um eine Stromerhöhung auf den Überstromwert (I_{Boost}) für eine durch die Entladezeit des zweiten Kondensators (C2) vorbestimmte Sperrzeit (t_{Block}) zu verhindern.

6. Verfahren nach einem der Ansprüche 1 bis 5, **gekennzeichnet durch** Regelung des Schaltnetzteils (1) mit einer Spannungsbegrenzungsregelung (CV) zum Begrenzen der Ausgangsspannung (V_{OUT}) des Schaltnetzteils (1) auf eine vorbestimmte maximale Nennspannung.

7. Schaltungsanordnung zur Regelung eines Schaltnetzteils (1) mit einer Strombegrenzungsregelungseinheit (CC), die zum Begrenzen des Ausgangsstroms (I_{OUT}) des Schaltnetzteils (1) auf einen vorgegebenen maximalen Begrenzungsstromwert (I_{Limit}) ausgebildet ist, und mit einer Stromerhöhungsregelungseinheit, die zur Einstellung des vorgegebenen maximalen Begrenzungsstromwertes (I_{Limit}) auf einen vorbestimmten Überstromwert (I_{Boost}), der höher als ein vorbestimmter Maximalstromwert (I_{Max}) ist, für eine vorbestimmte Erhöhungszeit (t_{Boost}) ausgebildet ist, wobei die Stromerhöhungsregelungseinheit einen Messwiderstand (R_{Mess}, R5) hat, durch den der Ausgangsstrom (I_{OUT}) des Schaltnetzteils (1) geleitet wird, und eine erste Vergleichseinheit (OP1), die zum Vergleichen der über den Messwiderstand (R_{Mess}, R5) abfallenden Messspannung (V_{Mess}) als ein mit dem Ausgangsstrom (I_{OUT}) proportionaler Messwert mit einer ersten Vergleichsspannung (V1_{Comp}) ausgebildet ist, und wobei die Stromerhöhungsregelungseinheit zur Einstellung der ersten Vergleichsspannung (V1_{Comp}) auf eine mit dem Maximalstromwert (I_{Max}) korrelierende Nennvergleichsspannung oder auf eine zur Nennvergleichsspannung höhere Erhöhungsvergleichsspannung, die mit dem höheren Überstromwert (I_{Boost}) korreliert, ausgebildet ist, wobei das Vergleichsergebnis als Regelsignal zur Begrenzung des Ausgangsstroms (I_{OUT}) entweder auf den Maximalstromwert (I_{Max}) oder den Überstromwert (I_{Boost}) an die Strombegrenzungsregelungseinheit (CC) geleitet wird, **dadurch gekennzeichnet, dass** die Stromerhöhungsregelungseinheit einen aus einer Reihenschaltung von Spannungsteilerwiderständen (R2, R3, R4) gebildeten Spannungsteiler hat, der mit einer konstanten Referenzspannung (V_{Ref}) versorgt wird, wobei die erste Vergleichsspannung (V1 comp) über einen ersten Teil der Spannungsteilerwiderstände (R2; R3, R4) als ein über den ersten Teil der Spannungsteilerwiderstände (R2; R3, R4) abfallender Anteil der konstanten Referenzspannung (V_{Ref}) abgegriffen wird, und dass ein Überbrückungsschalter (T2) zur elektrisch leitenden Überbrückung mindestens einer der Spannungsteilerwiderstände (R2; R3, R4) vorhanden ist, um bei Überbrückung die erste Vergleichsspannung (V1_{Comp}) auf den vorbestimmten Maximalstromwert (I_{Max}) für die Begrenzung auf den voreingestellten Maximalstromwert (I_{Max}) einzustellen.

8. Schaltungsanordnung nach Anspruch 7, **gekennzeichnet durch** eine zweite Vergleichseinheit (OP2), die zum Vergleichen der mit dem Ausgangsstrom (I_{OUT}) proportionalen Messspannung (V_{Mess}) mit einer zweiten Vergleichsspannung (V2_{Comp}), die im nicht überbrückten Zustand mindestens einer der Spannungsteilerwiderstände (R2, R3, R4) mit dem Überstromwert (I_{Boost}) korreliert und die im überbrückten Zustand mindestens einer der Spannungsteilerwiderstände (R2, R3, R4) mit dem Maximalstromwert (I_{Max}) korreliert, ausgebildet ist, wobei die Stromerhöhungsregelungseinheit eine erste Verzögerungsschaltung mit einem ersten Kondensator (C1) hat und zum verzögerten Überbrücken des mindestens einen Spannungsteilerwiderstandes (R2, R3, R4) zur Einstellung der ersten Vergleichsspannung (V1_{Comp}) auf die Nennvergleichsspannung ausgebildet ist, wenn die Messspannung (V_{Mess}) höher als die Vergleichsspannung (V1_{Comp}) ist, wobei die Verzögerung (t_{Boost}) durch Entladen des ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelte erste Schaltspannung, die den Überbrückungsschalter (T2) ansteuert, bereitstellt.

9. Schaltungsanordnung nach Anspruch 7, **gekennzeichnet durch** eine zweite Vergleichseinheit (OP2), die zum Vergleichen der mit dem Ausgangsstrom (I_{OUT}) proportionalen Messspannung (V_{Mess}) mit einer zweiten Vergleichsspannung (V2_{Comp}), die im nicht überbrückten Zustand mindestens einer der Spannungsteilerwiderstände (R2, R3, R4) mit dem Maximalstromwert (I_{Max}) korreliert und die im überbrückten Zustand mindestens einer der Spannungsteilerwiderstände (R2, R3, R4) mit einem geringeren Wert als der Maximalstromwert (I_{Max}) korreliert, ausgebildet ist, wobei die Stromerhöhungsregelungseinheit eine erste Verzögerungsschaltung mit einem ersten Kondensator (C1) hat und zum verzögerten Überbrücken des mindestens einen Spannungsteilerwiderstandes (R2, R3, R4) zur Einstellung der ersten Vergleichsspannung (V1 comp) auf die Nennvergleichsspannung ausgebildet ist, wenn die Messspannung (V_{Mess}) höher als die zweite Vergleichsspannung (V2_{Comp}) ist, wobei die Verzögerung (t_{Boost}) durch Entladen des ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelte erste Schaltspannung, die den Überbrückungsschalter (T2) ansteuert, bereitstellt.

10. Schaltungsanordnung nach Anspruch 7, **gekennzeichnet durch** eine zweite Vergleichseinheit (OP2), die zum Vergleichen der mit dem Ausgangsstrom (I_{OUT}) proportionalen Messspannung (V_{Mess}) mit einer zweiten Vergleichsspannung (V2_{Comp}), die mit dem vorbestimmten Maximalstromwert (I_{Max}) korreliert, ausgebildet ist, wobei die Stromerhöhungsregelungseinheit eine erste Verzögerungsschaltung mit einem ersten Kondensator (C1) hat und zum verzögerten Überbrücken des mindestens einen Spannungsteilerwiderstandes (R2, R3, R4) zur Einstellung der ersten Vergleichsspannung (V1 comp) auf die Nennvergleichsspannung ausgebildet ist, wenn die Messspannung (V_{Mess}) höher als die zweite Vergleichsspannung (V2_{Comp}) ist, wobei die Verzögerung (t_{Boost}) durch Entladen des ersten Kondensators (C1) erfolgt, der während einer Entladephase eine ansonsten unmittelbar nach Erkennung, dass die Messspannung (V_{Mess}) höher als die zweite Vergleichsspannung (V2_{Comp}) ist, abgeregelte erste Schaltspannung, die den Überbrückungsschalter (T2) ansteuert, bereitstellt.

11. Schaltungsanordnung nach einem der Ansprüche 7 bis 10, **dadurch gekennzeichnet, dass** die Stromerhöhungsregelungseinheit einen ersten Schalter (T1) hat, wobei der Überbrückungsschalter (T2) dem ersten Schalter (T1) invers schaltend so nachgelagert ist, dass der Überbrückungsschalter (T2) zur Überbrückung des mindestens einen Spannungsteilerwiderstandes (R2, R3, R4) geschlossen ist, wenn der erste Schalter (T2) geöffnet ist, und dass die Stromerhöhungsregelungseinheit eine zweite Verzögerungsschaltung mit einem zweiten Kondensator (C2) hat, die zum Halten einer zum Schalten des Überbrückungsschalters (T2) hinreichenden zweiten Schaltspannung für den Überbrückungsschalter (T2) mit dem zweiten Kondensator (C2) während einer Entladezeit des zweiten Kondensators (C2) ausgebildet ist, wenn der erste Schalter (T1) vom geöffneten in den geschlossenen Zustand übergeht und die zweite Schaltspannung ansonsten abfallen würde, um eine Stromerhöhung auf den Überstromwert für eine durch die Entladezeit des zweiten Kondensators (C2) vorbestimmte Sperrzeit (t_{Block}) zu verhindern.

12. Schaltungsanordnung nach einem der Ansprüche 7 bis 11, **dadurch gekennzeichnet, dass** die erste Verzögerungsschaltung eine Parallelschaltung aus dem ersten Kondensator (C1) und einem ohmschen Widerstand (R10) und/oder die zweite Verzögerungsschaltung eine Parallelschaltung aus dem zweiten Kondensator (C2) und einem ohmschen Widerstand (R12) hat.

13. Schaltungsanordnung nach Anspruch 12, **dadurch gekennzeichnet, dass** der ersten und/oder zweiten Verzögerungsschaltung jeweils eine Diode (D1, D2) in Durchlassrichtung vorgeschaltet ist.

14. Schaltungsanordnung nach einem der Ansprüche 7 bis 13, **gekennzeichnet durch** eine Spannungsbegrenzungsregelung (CV), die zum Begrenzen der Ausgangsspannung (I_{OUT}) des Schaltnetzteils (1) auf eine vorbestimmte maximale Nennspannung ausgebildet ist.
